# EUROPÄISCHE PATENTSCHRIFT

(11) **EP 0 532 986 B1**
(45) Veröffentlichungstag und Bekanntmachung des Hinweises auf die Patenterteilung: **10.12.1997**
(21) Anmeldenummer: 92115031.4
(22) Anmeldetag: 03.09.1992
(51) Int. Cl.: B01D 46/24, B01D 39/20, F01N 3/02

(54) **Elektrisch regenierbarer Partikelfilter**
Electrically regenerable filter
Filtre électriquement régénérable

(30) Priorität: 14.09.1991 DE 4130629
(43) Veröffentlichungstag der Anmeldung: 24.03.1993
(73) Patentinhaber: DEUTZ Aktiengesellschaft, 51063 Köln (DE); FORSCHUNGSZENTRUM JÜLICH GMBH, 52425 Jülich (DE)
(72) Erfinder: Siebenmorgen, Georg, W-5200 Siegburg (DE); Houben, Hans, W-5102 Würselen (DE); Dias, Francisco J., Dipl.-Ing., W-5170 Jülich (DE)

(56) Entgegenhaltungen:
- EP-A- 0 097 114
- EP-A- 0 216 729
- EP-A- 0 454 346
- EP-A- 0 467 147
- DE-A- 3 527 872
- US-A- 4 627 862
- PATENT ABSTRACTS OF JAPAN vol. 7, no. 159 (M-228)(1304) 13. Juli 1983 & JP-A-58 067 914 ( NIPPON JIDOSHA BUHIN SOGO KENKYUSHO K.K. )

## Beschreibung

Die Erfindung betrifft eine Filtervorrichtung, die ein Filter zum Abscheiden von Feststoffen aus dem Abgas einer selbstzündenden Brennkraftmaschine aufweist, wobei das Filter durch Abbrennen der angelagerten Feststoffe regenerierbar ist. Derartige Filter, die auch als Rußfilter oder Partikelfilter bezeichnet werden, werden zur Erfüllung bestehender oder zu erwartender Abgasemissionsgrenzwerte, insbesondere bei mit selbstzündenden Brennkraftmaschinen ausgerüsteten Fahrzeugen oder Arbeitsmaschinen eingesetzt. Dabei werden von dem Filter Feststoffe - insbesondere Rußpartikel - aus dem Abgas ausgeschieden und an dem Filter angelagert.

Derartige Filter sind bekannt und werden schon erfolgreich eingesetzt. Aus der EP-A 0 216 729 ist ein Filter bekannt, das als Filterkerze ausgestaltet ist und eine Schaumkeramik aufweist, die aus zwei Schichten besteht. Diese Schichten weisen eine unterschiedliche Porosität auf, wobei diese Schichten zur Herabsetzung des Abgasgegendrucks bei ansonsten gleichen Randbedingungen beitragen. Regeneriert wird das Filter durch Selbstentzündung. Die angelagerten Feststoffe weisen allesamt Kohlenstoff auf und entzünden sich durch Erhitzen auf Temperaturen ab ca. 550° und brennen normalerweise rückstandsfrei ab.

Aus der weiterhin bekannten DE-A 35 27 872 ist bekannt, eine elektrische Widerstandsheizung in Form von Heizdrähten um das Filter zu wickeln, bzw. in Strömungsrichtung direkt vor dem Filter anzuordnen. Dabei lagern sich Feststoffe bei voller Beladung des Filters bis stromaufwärts der Widerstandsheizung an den Filter an. Wird nun ein Abbrennvorgang eingeleitet, werden die im Bereich der Widerstandsheizung befindlichen Feststoffe vollständig abgebrannt, während die stromaufwärts angelagerten Feststoffe nicht oder nur unvollständig abbrennen. Dies liegt an einer Wärmeabfuhr durch das bei der Regeneration weiterhin durch die Feststoffschicht und das Filter strömende Abgas, entgegen dessen Strömungsrichtung sich der Abbrennvorgang ausbreiten muß.

Der Erfindung liegt die Aufgabe zugrunde, einen Filter bereitzustellen, der eine einfache und vollständige Regenerierbarkeit aufweist.

Diese Aufgabe wird erfindungsgemäß dadurch gelöst, daß das Filter heterogen aufgebaut eine grobporige Schicht und eine feinporige Schicht aufweist, wobei das Filter so in dem Abgasstrom angeordnet ist, daß zuerst die grobporige Schicht von dem Abgas durchströmt wird und die grobporige Schicht eine Struktur aufweist, die das Eindringen von Feststoffen ermöglicht, während die in Strömungsrichtung anschließende feinporige Schicht die Feststoffe ausscheidet. Dadurch, daß die Feststoffe in das Filter eindringen können, werden stromaufwärts des Filters bzw. an dessen Oberfläche keine Feststoffe angelagert. Wird nun beispielsweise eine elektrische Widerstandsheizung, die durch elektrisch leitfähiges Filtermaterial gebildet ist, vor der grobporigen Schicht eingeschaltet, so ist in dem Fall eine sichere und vollständige Abbrennung von Feststoffen sichergestellt, da der Abbrennvorgang in Strömungsrichtung des Abgases erfolgt und eine Auskühlung ausgeschlossen ist. Dabei hat sich als Filter-Herstellungsmaterial Siliciumcarbid (SiC) bewährt.

Dabei ist in Weiterbildung die elektrische Leitfähigkeit in dem Filtermaterial so eingestellt, daß die grobporige Schicht und die feinporige Schicht eine unterschiedliche elektrische Leitfähigkeit aufweisen. Vorteilhafterweise weist insbesondere die grobporige Schicht eine höhere elektrische Leitfähigkeit als die feinporige Schicht auf. Dadurch wird der Bereich des Filters, in dem die Feststoffe angelagert sind, gleichmäßig erhitzt, so daß eine vollständige Regeneration des Filters sichergestellt ist. Die anschließende feinporige Schicht braucht nicht oder nur so weit erhitzt zu werden, daß kein unzulässiges, das Filter möglicherweise zerstörende thermische Gefälle in dem Filter auftritt. Dadurch kann auch der Energieeinsatz zum Regenerieren des Filters verringert werden. In Weiterbildung der Erfindung weist die grobporige Schicht eine in Strömungsrichtung des Abgases geringere Erstreckung als die feinporige Schicht auf. Dabei braucht die grobporige Schicht im Prinzip nur eine geringfügig größere Dicke aufweisen, als diese durch die maximale abgeschiedene Feststoffschicht vorgegeben ist. Dadurch wird insbesondere, wenn diese grobporige Schicht elektrisch leitend ausgebildet ist, eine weitere Reduzierung des Energieeinsatzes erreicht, da nur die wirklich benötigte Schichtdicke aufgeheizt werden muß.

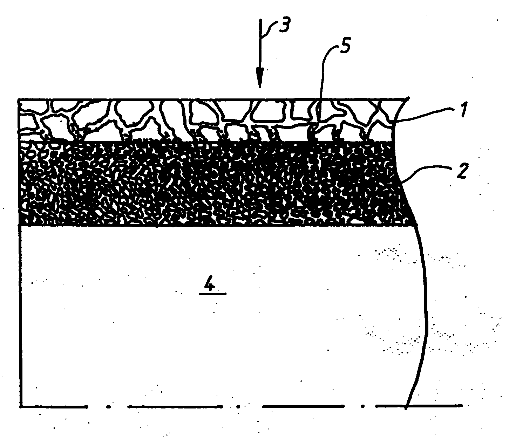

Weitere Vorteile der Erfindung sind der Zeichnungsbeschreibung zu entnehmen, in der ein in der Zeichnung dargestelltes Ausführungsbeispiel der Erfindung beschrieben ist.

Ein Filter, insbesondere ein Partikelfilter zur Abscheidung in von Abgasen von selbstzündenden Brennkraftmaschine enthaltenen Feststoffen, insbesondere Dieselruß weist einen heterogenen zweischichtigen Aufbau auf. Das Filter, von dem nur ein Ausschnitt in der Zeichnung dargestellt ist, weist eine grobporige äußere Schicht 1 und eine feinporige innere Schicht 2 auf. Das Filter ist dabei so in dem Abgasstrom angeordnet beziehungsweise ausgerichtet, daß der Abgasstrom - gekennzeichnet durch den Pfeil 3 - zunächst die grobkörnige Schicht 1 und anschließend die feinkörnige Schicht 2 durchströmt, um dann in den Innenraum 4 des Filters zu gelangen. Von dem Innenraum 4 des beispielsweise als Filterkerze ausgebildeten Filters gelangt das gereinigte Abgas gegebenenfalls über weitere Abgasleitungen in die Umgebung.

Die grobkörnige Schicht 1 weist eine gegenüber der feinkörnigen Schicht 2 größere elektrische Leitfähigkeit auf, wobei die elektrische Energie in geeigneter Weise dem Filter zugeführt wird.

Im Betrieb strömen die Abgase der Brennkraftmaschine zunächst durch die grobkörnige Schicht 1 und gelangen anschließend in die feinkörnige Schicht 2. In dem Abgas enthaltene Feststoffe 5 weisen dabei eine Partikelgröße auf, die das Eindringen in die grobkörnige Schicht 1 ermöglichen, während die Struktur der feinkörnigen Schicht 2 so ist, daß die Feststoffe in diese Schicht nicht eindringen können. Somit wird über einen Beladungszyklus in der grobkörnigen Schicht 1 eine bestimmte Menge von Feststoffen 5 ausgeschieden und angelagert, wobei die Menge beispielsweise über die Druckdifferenz des Abgases vor und hinter dem Filter bestimmbar und zur Einleitung des Regenerationsvorganges ausnutzbar ist. Soll nun ein Regenerationsvorgang eingeleitet werden, wird dem Filter elektrische Energie zugeführt, wobei infolge der Leitfähigkeit der grobkörnigen Schicht 1 diese gleichmäßig so weit erhitzt wird, bis die Zünd- beziehungsweise die Abbrenntemperatur der Feststoffe - dies ist bei ausgeschiedenen Rußpartikeln eine Temperatur von ca. 650° - erreicht ist. Dadurch, daß sich durch die erfindungsgemäße Ausgestaltung des Filters keine Feststoffe stromaufwärts der Heizeinrichtung befinden, ist insbesondere bei einem Regenerationsvorgang, der bei weiterhin durch das Filter strömendem Abgas vorgenommen wird, eine sichere und vollständige Regeneration gewährleistet, da der Abbrennvorgang beziehungsweise die Wärmeführung beim Abbrennvorgang immer in Strömungsrichtung des Abgases erfolgt und sich nicht entgegen der Strömungsrichtung bis stromaufwärts über eine Heizeinrichtung hinaus ausbreiten muß.

## Patentansprüche

1. Filtervorrichtung, die ein Filter zum Abscheiden von Feststoffen aus dem Abgas einer selbstzündenden Brennkraftmaschine aufweist, wobei das Filter durch Abbrennen der angelagerten Feststoffe regenerierbar ist, und der Abbrennvorgang durch elektrisches Erhitzen des Filters einleitbar ist, und die Mittel umfaßt, um dem Filter elektrische Energie zuzuführen, wobei das Filter in Strömungsrichtung des Abgases zuerst eine grobporige Schicht (1) und direkt anschließend eine feinporige Schicht (2) aufweist, wobei die grobporige Schicht (1) eine Struktur aufweist, die das Eindringen von Feststoffen (5) ermöglicht, während die anschließende feinporige Schicht (2) die Feststoffe (5) ausscheidet, und wobei das Filter elektrisch leitfähig ist.

2. Filtervorrichtung nach Anspruch 1,
*dadurch gekennzeichnet*, daß die grobporige Schicht (1) und die feinporige Schicht (2) eine unterschiedliche elektrische Leitfähigkeit aufweisen.

3. Filtervorrichtung nach einem der vorhergehenden Ansprüche,
*dadurch gekennzeichnet*, daß die grobporige Schicht (1) eine höhere elektrische Leitfähigkeit als die feinporige Schicht (2) aufweist.

4. Filtervorrichtung nach einem der vorhergehenden Ansprüche,
*dadurch gekennzeichnet*, daß die grobporige Schicht (1) eine in Strömungsrichtung des Abgases geringere Erstreckung als die feinporige Schicht (2) aufweist.

## Claims

1. A filter device which comprises a filter for the removal of solid particles from the exhaust gas of a self-igniting internal combustion engine, wherein the filter can be regenerated by burning off the deposited solid particles and the burn-off process can be initiated by electrical heating of the filter and which comprises means to feed electrical energy to the filter, wherein the filter, in the direction of flow of the exhaust gas, is firstly provided with a macroporous layer (1) and directly adjoining this a microporous layer (2), wherein the said macroporous layer (1) has a structure which facilitates the penetration of solid particles (5), whereas the adjoining microporous layer (2) separates off the solid particles (5), and wherein the filter is electrically-conductive.

2. A filter device according to claim 1,
characterised in that the macroporous layer (1) and the microporous layer (2) have differing electrical conductivities.

3. A filter device according to one of the preceding claims,
characterised in that the macroporous layer (1) has a higher electrical conductivity than the microporous layer (2).

4. A filter device according to one of the preceding claims,
characterised in that the macroporous layer (1) extends a smaller distance in the direction of flow of the exhaust gas than does the microporous layer (2).

## Revendications

1. Dispositif de filtration qui présente un filtre servant à séparer des matières solides à partir des gaz d'échappement d'un moteur à combustion interne à allumage spontané, caractérisé en ce que
• le filtre peut être régénéré par le brûlage des matières solides qui se sont déposées, et le processus de brûlage peut être initié par le chauffage électrique du filtre,
• le dispositif comprend des moyens pour amener au filtre de l'énergie électrique, le filtre présentant, dans le sens de l'écoulement des gaz d'échappement, d'abord une couche grossièrement poreuse (1) et, directement à la suite, une couche finement poreuse (2), la couche grossièrement poreuse (1) présentant une structure qui permet la pénétration des matières solides (5) à travers celle-ci, tandis que la couche finement poreuse qui vient ensuite, sépare les matières solides (5), et
• le filtre est électriquement conducteur.

2. Dispositif de filtration selon la revendication 1,
caractérisé en ce que
la couche grossièrement poreuse (1) et la couche finement poreuse (2) présentent des conductibilités électriques différentes.

3. Dispositif de filtration selon l'une des revendications précédentes,
caractérisé en ce que
la couche grossièrement poreuse (1) présente une conductibilité thermique plus élevée que la couche finement poreuse(2).

4. Dispositif de filtration selon l'une des revendications précédentes,
caractérisé en ce que
la couche grossièrement poreuse (1) présente une étendue plus faible que la couche finement poreuse (2) dans le sens de l'écoulement des gaz d'échappement.
